Europäisches Patentamt

European Patent Office

Office européen des brevets

(11) Publication number: **0 377 476**
**A1**

(12) # EUROPEAN PATENT APPLICATION

(21) Application number: **90200002.5**

(22) Date of filing: **03.01.90**

(51) Int. Cl.⁵: **B01D 53/34, C01C 1/12**

(30) Priority: **03.01.89 NL 8900005**

(43) Date of publication of application:
**11.07.90 Bulletin 90/28**

(84) Designated Contracting States:
**AT BE CH DE DK ES FR GB GR IT LI LU NL SE**

(71) Applicant: **COÖPERATIEVE NEDERLANDSE CHAMPIGNONKWEKERSVERENIGING B.A.**
**Driekronenstraat 6**

Milsbeek(NL)

(72) Inventor: **Vollenbroek, Johannes Gerardus**
**Waldeck-Pyrmontsingel 18**
**NL-6521 BC Nijmegen(NL)**

(74) Representative: **Van kan, Johan Joseph Hubert, Ir. et al**
**P.O. Box 645 Boschdijk 155**
**NL-5600 AP Eindhoven(NL)**

(54) Method of purifying air containing ammonia and device to be used thereby.

(57) A method of purifying air containing ammonia, said air originating from a bio-industrial process, by removing ammonia from the air mixture, wherein the removal of ammonia is a result of washing with an acid and the thus obtained salt is a product that can be used again industrially.

FIG.1

**Method of purifying air containing ammonia and device to be used thereby.**

The present invention relates to a method of purifying air containing ammonia, said air originating from a bio-industrial process, by removing ammonia from the air mixture. The present invention furthermore relates to a device for carrying out such a method. The reduction of the emission of ammonia is necessary within the framework of the problems with regard to acid rain. The total emission of ammonia in the Netherlands amounts to approximately 200,000 tons annually, a large part of which is caused by the bio-industry. The harmful effects of this emission of ammonia are especially noticeable at a short distance from the source.

From Dutch patent application 7408280 a process is known for the removal of ammonia from exhaust gasses by washing the exhaust gasses with sweet water. However in this process complicated apparatus is required and the ammonia is removed unsufficiently from the exhaust gass. From Belgian patent 542,042 the preparation is known of ammonium sulphate by washing the ammonia comprising gasses with sulphuric acid. As an example of ammonia comprising gas coke furnace gas has been mentioned. From this Belgian patent no indication however is known to purify gasses derived from the bio-industry, in order to decrease strongly the discharge of ammonia. From German patent application 3,614,056 a process and apparatus are known to work up agricultural waste products, during which process ammonia can be developed. The thus developed ammonia is oxidized by using aerobic bacteries to obtain a nitrate. Biological washing of air and biofiltration require large investments and high operating costs. Therefore it has been tried to find a method of purifying air containing ammonia which originates from a bio-industrial process, whereby the ammonia is recovered in a valuable form. As an example of such a bio-industrial process a method of preparing compost has been taken. It will be apparent, however, that the method and device now developed can also be used for purifying air flows containing ammonia which originate from other sources, such as air coming from animal houses such as the ones used in factory farming. At the same time air flows containing ammonia, which are released in industrial processes, can be freed from ammonia.

In the preparation of compost which is used by mushroom growers the basic materials used are horse manure, chicken manure, straw, gypsum, water and as additives urea, ammonium sulphate and calcium carbonate can be used. In said basic material a microflora begins to develop, which breaks down the carbohydrates, during which process heat is released. As a result of the decomposition of proteins ammonia is formed and the temperature increases. Because of the action of the ammonia the straw will become soft. The concentration of ammonia and the temperature must not become too high, however, as this is harmful for the microflora. The decomposition products of polysacharrides and proteins form the basic materials for constantly new cells which contain polysacharrides (the cell membrane) and proteins (the contents of the cell). In this way the compost for mushroom growers is prepared. The quantity of ammonia which is released in this process is the net result of continuous decompositions (ammonification) and synthesizing processes (N-immobilisation). Up to now said released ammonia has been released in an air flow with an increased temperature (40 - 70 °C), fully saturated with water vapour. The method of reducing said emission of ammonia is according to the invention characterized in that removal of ammonia takes place by washing with an acid and the salt as obtained gives a product that can be used again industrially. More in general the method of purifying air containing ammonia, which air originates from a bio-industrial process , is carried out by removing ammonia from the air mixture and is characterized in that the air mixture containing moisture and ammonia is cooled, washed in one or more stages with an acid and a concentrated solution of ammonium salt is prepared, which salt can at least partly be returned as a basic material for the bio-industrial process of preparation of compost.

The invention will be further explained with reference to the following description, wherein reference is made to the appended drawing, in which:

Fig. 1 is a diagrammatic illustration of the method of removing ammonia from air originating from the preparation of compost, wherein the ammonium salt formed is resupplied to the basic materials;

Fig. 2 is a diagrammatic survey of a method according to the invention, wherein the air containing ammonia is cooled and concentrated solution of ammonium salt is prepared which is extracted from the system.

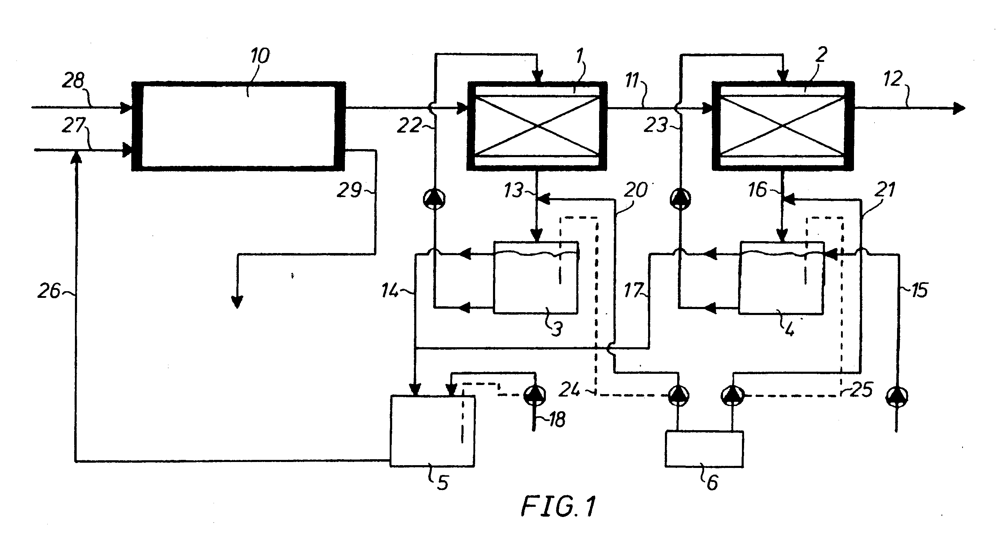

In fig. 1 the air from the tunnel 10 is washed with sulphuric acid in a first washer 1. As a result of this ammonium sulphate is formed, which can be returned to the material to be supplied to the tunnel 10 as a raw material in a concentration of 5 - 20%. The solution of ammonium sulphate formed by the air purifying process entirely or in part replaces other raw materials containing nitrogen for the purpose of the fermentation, such as urea, chicken manure and ammonium sulphate which is supplied from outside. Preferably said air purification is carried out in the form of a washing process in a two-stage cross current washer, as is indicated in fig. 1. When a removing efficiency of 95% is sufficient one washing stage will suffice. Besides the advantage of a higher efficiency(>99%) a two-stage washer has the additional advantage that the eventual consumption of sulphuric acid for the two stages is less than when only one washer is used. When the two-stage washer is used a lower consumption of sulphuric acid is achieved when the pH in the first stage, when air containing ammonia is led through, is set at about 6.5 - 7, whilst in the second stage a pH-value of about 5 is maintained when the air is led through. Purified air is discharged from the second washing stage 2 via the pipe 12. It will be clear that when there is no second stage, purified air is discharged from the first washing stage 1 via the pipe 11. When there is a second stage 2,air to be further purified is supplied to said second washing stage 2 via the pipe 11.

The washing fluid which is discharged from stage 1 via the pipe 13 comes in a buffer vessel 3, and the overflow from the buffer vessel 3 is supplied, via the pipe 14, to the water basin 5. When a second washing stage is used water can be supplied, via the pipe 15, to the buffer vessel 4, to which buffer vessel 4 also the washing water from the second stage is supplied, via the pipe 16. The overflow from the buffer vessel is then combined, via the pipe 17, with the overflow 14 and supplied to the water basin 5. The water basin 5 is provided with a level adjustment and possibly water is supplied to said water basin via the pipe 18. Adjusting the pH in the washers 1 and 2 takes place from the storage vessel 6 containing sulphuric acid, which sulphuric acid is supplied to the buffer vessels 3 and 4 via the pipes 20 and 21, while recirculation of the washing water takes place between the buffer vessels 3 and 4 with the washers 1 and 2, via the respective pipes 22 and 23. The dotted lines 24 and 25 indicate that the control of the pH takes place in the buffer vessels 3 and 4, whereby according to one preference the pH is kept at 5. Any amines present in the air are intercepted in the second washing stage and, together with the aqueous solution of ammonium sulphate, returned to the supply for raw materials 27 via the water basin 5. Fresh air is supplied to the closed tunnel with forced air circulation via the pipe 28. The fermented compost is discharged from the tunnel 10 via the pipe 29.

The air, leaving stage 1 will have a relative humidity between 95 and 98% a few days after the process has been started, whilst the ingoing air is 100% saturated. The cause of this is that the ammonium sulphate which is formed is hygroscopic. The higher the salt content the lower the equilibrium relative humidity of the salt solution and the more water is extracted from the air. As a result of said supply of condensed water and the acid dosing the buffer vessel 3 will start to overflow via the pipe 14.

After a few days an equilibrium is reached: the volume of condensing water is the same as the volume of discharged water. In practice this takes place with a concentration of ammonium sulphate in the washing water between 5 and 20%, dependent on the temperature and the $NH_3$-content of the air supplied. Water dosing at stage 1 will be superfluous then.

The air unsaturated with water vapour is supplied to stage 2 via the pipe 11, and the remaining ammonia and amines are washed out with a more diluted solution. Said washing water has a high equilibrium relative humidity, about 98 - 99%. Thus the air will absorb water across stage 2, so that water dosing via the pipe 15 is necessary here. A fixed water delivery is used, such that in case of a low concentration (about 0.1 - 1%) the solution of ammonium sulphate is discharged to the water basin 5 via the overflow 17.

The pH in the second stage is 5, in order to intercept all amines as well. With a pH above 5.0 the efficiency of removing amines from the air is low. The eventual pH of the mixture of the overflows of the two stages is thus about 6.5, whilst still a nearly complete removal of ammonia and amines (>99%) is achieved, which is not possible with a single-stage washer at a pH of 6.5.

The two stages each have a separate water circuit, viz. 22 and 23. The discharges of the two stages meet in the supply to the water basin 5 with the water caught by means of a possible drip catcher (not shown in fig. 1).

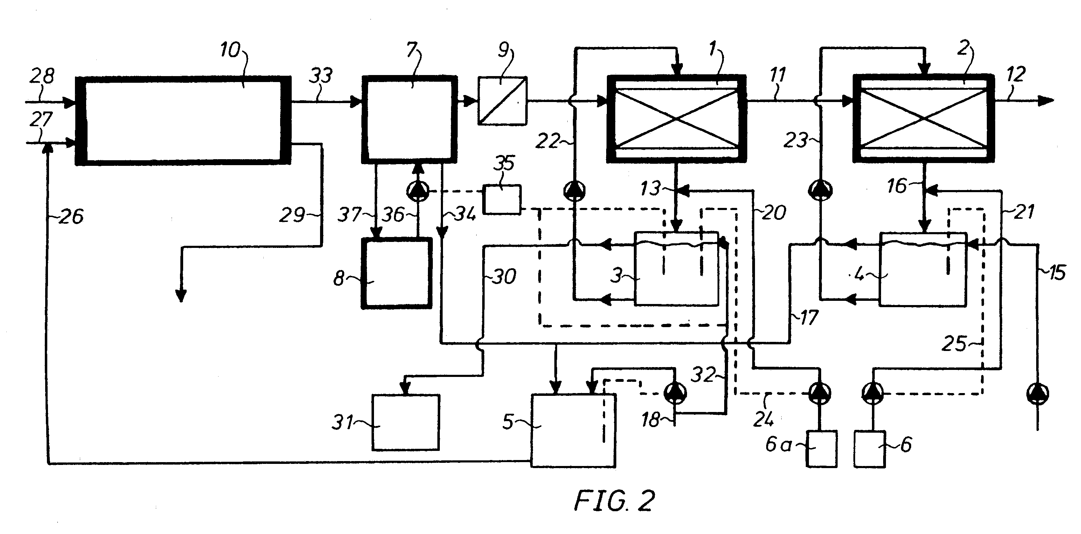

Fig 2 shows an alternative for a method such as the one described in fig. 1, wherein it is not only possible to form ammonium sulphate from ammonia, which can be resupplied to the raw materials for the preparation of compost, but wherein also a strongly concentrated salt solution is prepared, such as ammonium phosphate, which is considered a valuable product because of its high, adjustable concentration of ammonium phospate. In the illustrated embodiment according to fig. 2 washing is done with sulphuric acid in stage 2, but it will be seen that in the second washing stage also another acid can be used, whereby a product is formed which is not resupplied to the raw materials for the preparation of compost. The reference numbers in fig. 2 correspond as much as possible with the reference numbers in fig. 1, corresponding parts are indicated with corresponding reference numbers. It is not necessary, therefore, to describe the entire diagram, because reference can be made to the preceding description in connection with fig. 1 for that part in fig. 2 where the reference numbers correspond with the reference numbers in fig. 1.

The most important difference of the method which is illustrated in fig. 2 with respect to the one according to fig. 1 is that according to fig. 2 the air which is discharged from the tunnel 10 is first cooled down in the cooler 7, from a temperature of 40 - 70 °C to 30 - 35 °C, more in particular from 50 °C to 30 °C. As a result of this the water content of the air which is supplied to the cooler 7 via the pipe 33 is decreased by a factor 2 - 5, whilst the condensate which is discharged from the cooler 7 is discharged, via the pipe 34, to a water basin 5 located thereunder carries along only a fraction of the supplied ammonia (about 10%), because the ammonia present in the air is in its gas phase. The cooler 7 is furthermore connected with a drip catcher 9, the water caught by said drip catcher is also discharged to said water basin 5. A further difference of the diagram illustrated in fig 2 with respect to the one illustrated in fig. 1 is that the washers 1 and 2 are provided with different supplies of acid, from storage vessel 6a and storage vessel 6 respectively, whereby via the storage vessel 6a phosphoric acid is supplied to the first washer, as a result of which concentrated ammonium phosphate is caught in the receptacle 31 from the first washing stage, especially from the buffer vessel 3 via the pipe 30. It is also possible to use nitric acid, sulphuric acid or hydrochloric acid, instead of phosporic acid, dependent on the salt required at 31. The pH in the buffer vessel 3 is adjusted such that when ammonia is led through the pH is 6.5 - 7, in order to minimize the consumption of acid and to let amines pass to the second washing stage. Because a pH of about 5 is used there when leading through air containing ammonia any amines which are present are intercepted in stage 2.

The outflow from stage 2, via the overflow from the buffer vessel 4 which is discharged via the pipe 17, is discharged, combined with the condensate from the cooler via the pipe 17, and as a result of the ammonia present in the condensate in the pipe 34 the pH of about 5 is increased to a pH of about 9, because the condensate which is discharged via the pipe 34 contains about 0.5 g/l of ammonia. By measuring the conductivity in stage 1, which is done by means of the conductivity meter 35, the quantity of cooling water is controlled in the pipes 36 and 37 and the quantity of water supplied via the pipe 18. All this determines the contration of the salt in the receptacle 31.

The invention will be further explained with reference to the following tables showing the mass balance. Table A illustrates the mass balance across stage 1 according to diagram 2. When the cooler 7 is not present and thus the method according to diagram 1 is used the concentration of ammonium sulphate is 12%. When the cooler 7 is used and the method according to diagram 2 is used, therefore, the concentration of ammonium sulphate is 30%, approximately corresponding with 430 g/kg of water. Table B illustrates the mass balance across stage 2.

TABLE A

| Stage 1 | | | |
|---|---|---|---|
| parameter | before stage 1 | after stage 1 | notes |
| quantity of ammonia in the air | 37.5 kg/h | 0.75 kg/h | 98% removal |
| ammonia to washing water | 36.75 kg/h | | |
| equivalent quantity of ammonium sulphate | 142.6 kg/h | | |
| water | 3000 kg/h | 2670 kg/h | |
| water absorption | 330 kg/h | | at ERH* 89% |
| Notes: | | | |

*)ERH = equilibrium relative humidity

4

TABLE B

| Stage 2 | | | |
|---|---|---|---|
| parameter | before stage 2 | after stage 2 | notes |
| quantity of ammonia + amine in the air | 0.75 kg/h | 0.075 kg/h | 90% removal |
| quantity of ammonia to washing water | 0.675 kg/h | | relative hum. from 89 to 99% |
| water supply | 350 kg/h | | |
| water absorption by the air | 300 kg/h | | |
| water discharge | 50 kg/h | | |
| discharge of ammonia + amines | 2.7 kg/h | | calculated as ammon. sulphate |

With regard to the raw materials to be supplied to the tunnel 10 via the pipe 27 it is important to note that with a total quantity of raw materials of 1,000 kg , consisting of changing quantities of horse manure, chicken manure, straw, gypsum, lime, ammonium sulphate, urea and water, 600 kg of compost are formed after composting. Dry matter has disappeared as a result of the conversion of polysacharrides $C_6H_{12}O_6$ in $CO_2$ and $H_2O$. Furthermore there is a reduction in weight since water has evaporated. The development of ammonia is strongly dependent on the method of preparation and the circumstances under which the process takes place, but it may vary from 0.25 kg/ton to 1.25 kg/ton, without and with dosing of chicken manure, respectively.

The mass balance across the cooler 7 is illustrated in table C.

TABLE C

| Cooler | | | |
|---|---|---|---|
| Parameter | before cooler | after cooler | notes |
| air supply | 100,000 m³/h | | continuous |
| air temperature | 50 °C | 30 °C | |
| content of water vapour of the air at 50 °C | 0.08 kg/m³ | | |
| content of water vapour of the air at 30 °C | | 0.03 kg/m³ | |
| quantity of condensate | 5 m³/h | | contains 0.5 kg/m³ ammonia |
| content of ammonia in the air | 400 mg/m³ | 375 mg/m³ | average |
| quantity of ammonia | 40 kg/h | 37.5 kg/h | |

In the preparation of compost it is possible that several tunnels are filled and emptied in succession. The air containing ammonia is produced for about 5 days and purified in the device described. The stage at which ammonia is released lasts about 4 - 6 days. Because a large number of tunnels, viz. more than 20, is connected to the device according to the invention, and the tunnels are filled one after the other, air containing ammonia is continuously supplied to the installation according to the invention and purified air is discharged.

It will be apparent that the principles such as described in figs 1 and 2 can also be applied to other sources of air containing ammonia, such as air from pighouses.

## Claims

1. A method of purifying air containing ammonia, said air originating from a bio-industrial process, by removing ammonia from the air mixture, characterized in that the removal of ammonia is a result of washing with an acid, and the thus obtained salt is a product that can be used again industrially.

2. A method of purifying air containing ammonia, said air originating from a bio-industrial process, by removing ammonia from the air mixture, characterized in that the air mixture containing moisture and ammonia is possibly cooled and is then washed in one or more stages with an acid and a concentrated solution of an ammonium salt is prepared which salt at least partly is used as a basic material for the bio-industrial process in the preparation of compost.

3. A method according to claims 1-2, characterized in that the washing is done with sulphuric acid

4. A method according to claims 1-3, characterized in that air saturated with water vapour and containing $NH_3$, with a temperature of 40 -70 °C, is cooled to a temperature of about 30 - 35 °C, the condensate is caught and together with ammonium sulphate solution returned to the basic material for the preparation of compost.

5. A device for carrying out the method according to claim 1, characterized in that the device consists of a washing column in which the air can be washed with an acid, which washing column may be coupled to a second washing column which column is connected with a buffer vessel.

6. A device according to claim 5, characterized in that a heat exchanger is provided before the washing column and the first and the second washing columns are provided with separate supplies for acid and separate discharges for the salt solution formed

FIG.1

EP 0 377 476 A1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 709 521 (VEB KOMBINAT ILKA LUFT- UND KÄLTETECHNIK) <br> * Page 5, lines 28-46 * <br> --- | 1 | B 01 D 53/34 <br> C 01 C 1/12 |
| Y | NL-A-8 703 136 (ADCO) <br> * Page 3, lines 11-27 * <br> --- | 1 | |
| A | BE-A- 542 042 (SIMON-CARVES) <br> --- | | |
| A | NL-A-7 408 280 (CLUETT & PEABODY) <br> & GB-A-1 452 161 <br> --- | | |
| A | DE-A-3 614 056 (L.-P. STOTZ) <br> ----- | | |

TECHNICAL FIELDS SEARCHED (Int. Cl.5)

B 01 D
C 01 C
C 05 F

The present search report has been drawn up for all claims

| Place of search | Date of completion of the search | Examiner |
|---|---|---|
| THE HAGUE | 09-04-1990 | BOGAERTS M.L.M. |